Europäisches Patentamt

European Patent Office

Office européen des brevets

(19)

(11) Publication number: **0 247 815**
A2

# (12) EUROPEAN PATENT APPLICATION

(21) Application number: 87304600.7

(51) Int. Cl.⁴: **B 23 K 1/00**

(22) Date of filing: **22.05.87**

(30) Priority: **28.05.86 GB 8612972**

(43) Date of publication of application: **02.12.87**
Bulletin 87/49

(84) Designated Contracting States: **AT BE CH DE ES FR GB GR IT LI LU NL SE**

(71) Applicant: **I.S.C. Chemicals Limited, Borax House Carlisle Place, London SW1P 1HT (GB)**

(72) Inventor: **Slinn, David Stanley Lloyd, Cotswold House Manor Road, Abbots Leigh Bristol (GB)**
Inventor: **Rowden, John William, 54 Haldon Close, Bedminster Bristol (GB)**

(74) Representative: **Whalley, Kevin et al, MARKS & CLERK 57/60 Lincoln's Inn Fields, London WC2A 3LS (GB)**

(54) Vapour phase soldering.

(57) A process for soldering wherein heat to melt solder is transferred from a vapour, which uses two modes of heat transfer, i.e. latent heat of condensation and transfer of sensible heat from the superheated vapour, and an apparatus suitable for carrying out the process.

M&C FOLIO: 799P54346                    WANGDOC: 0504a

## VAPOUR PHASE SOLDERING

This invention relates to vapour phase soldering.

'Vapour phase soldering', or more correctly 'condensation soldering', has become well established since it was introduced in the 1970's (see US Patent Nos. US-A-3866,307; 3,904,102 ; 3,947,240 and IBM technical disclosure Vol. 25, No. 9 Feb 1983).  The technique has become particularly useful in modern electronics, where densely packed components are fitted onto printed circuit boards using the surface mounting technique (SMT).  The SMT is forecast to surpass the older 'through-hole' methods of attachment within a few years and the trend is accelerating rapidly.  The motivation for this change is equipment size reduction, lower cost and improved performance.  The growth of the vapour soldering technique parallels that of SMT.

Vapour phase soldering is a basically simple technique where the assembly to be soldered (or reflowed) is lowered into the saturated vapour of a liquid having a normal boiling point about 30°C above the melting point of the solder being used.  The liquid must be inert, non-flammable and of very low toxicity, and these properties are only exhibited by fluorocarbons. The vapour phase method gives a very fast heating rate, due to the liberation of latent heat, as the cold assembly is immersed in the vapour. Another advantage is the very even temperature to which the parts are subjected. Also, oxygen is excluded, thus preventing metal corrosion and solder dross formation. Furthermore, the process can differentiate between high and low thermal masses, since condensation is automatically directed towards such regions.

The process operates at ambient pressures and, therefore, at the normal boiling point of the fluorocarbon liquid being used. Because commonly used solders melt in the range of 180 to 300°C, several fluorocarbon fluids are required, the most common of which boil in the 215°C or 260°C ranges. These temperatures are respectively applicable to the commonly used 60/40 w/w tin/lead alloys and tin rich solders. Lead rich solders melting in the 300°C range are also used. At present, there is no commercially available fluorocarbon fluid suitable for this temperature and it is a purpose of the invention to provide an answer to this need, using a combination of condensation and superheating in currently available fluorocarbon fluids. Also, the invention allows the use of a single fluorocarbon liquid for the entire range of commonly

3

used solders melting in the 180°C to 300°C range. This temperature flexibility is an advantage over state of the art vapour soldering processes.

Available fluorocarbon liquids are prepared by electrochemical, direct fluorination or polymerisation techniques. All of these procedures have difficulties in producing a stable liquid that boils in the 300°C range. The yield of electrochemical processes become progressively less as the boiling point increases, and direct fluorination procedures can have difficulties when evaporating high boiling compounds from reactors. Polymerisation methods tend to be inefficient and produce compounds containing a hetero-atom, such as oxygen, which tend to have a limit of stability in the 300°C range. The most stable compounds tend to be those containing carbon and fluorine only, but even some of these can dehalogenate at these temperatures and it is difficult to match stability with boiling point when selecting a suitable compound. It is one aim of this invention to give a much greater flexibility in the number of compounds available for vapour phase soldering at the 300°C temperature range. However, the process is not limited to this temperature and can be used across the whole spectrum of temperatures required for printed circuit board and semi-conductor soldering, i.e. from about 180° to 320°C.

4

Infra-red heating systems have been long established and are a competitive soldering method to vapour phase. Problems encountered are that the process is slow, subject to oxidation, scorching and uneven reflection of radiation from various surfaces. Nevertheless, infra-red methods are very widely and successfully used. Limits are reached where the assembly is densely packed, of complex geometry or of widely varying intra-assembly thermal capacity. Unless process parameters are closely controlled, scorching can occur and the process is typically three to four times slower than vapour phase. In order to overcome some of these defects, the latest infra-red machines use long wavelength diffuse radiation emitted from surfaces where the temperature is closely controlled. These machines also utilise forced air as a heat transfer medium so that they are no longer truly infra-red, but a forced convection/radiation process.

In one aspect the present invention provides a process for soldering wherein heat to melt solder is transferred from a vapour:

    (a)  by latent heat of condensation of the vapour, and

    (b)  by transfer of sensible heat from the vapour, which is super-heated above its normal boiling point.

Preferably the vapour is that of a saturated fluorocarbon.

More preferably the fluorocarbon is predominantly perfluoro(perhydrophenanthrene) $C_{14}F_{24}$.

Preferably the heat transfer in stage (b) above is aided by natural or forced convection of the superheated vapour.

At higher temperatures a substantial proportion of the heat-transfer will be by radiation.

The combination of the above modes of heat transfer allows faster heating time than for infra-red alone. This has been confirmed by experiment.

In a second aspect the invention provides apparatus for soldering components, comprising:

(a)  means for boiling and superheating a heat-transfer liquid to produce a superheated vapour;

(b)  walls defining a vapour space for confining heat-transfer vapours, this space having an upper boundary limited by cooling means;

(c)  a carrier assembly for introducing, supporting

6

and removing an assembly of components to be soldered in said vapour space;

(d)   a vapour recovery circuit for condensing vapour escaping from the space (b) and returning it to the boiler/superheater means.

The invention will be further described, by way of example only, with reference to the accompanying drawings, in which:

Figure 1 shows in side view an apparatus for carrying out the process of the present invention;

Figure 2 shows a test cell for use with the apparatus shown in figure 1;

Figure 3 shows in side view a batch apparatus for vapour phase soldering using the condensation/superheat process of the present invention; and

Figure 4 shows in side view an in-line apparatus for vapour phase soldering using the condensation/superheat process of the present invention.

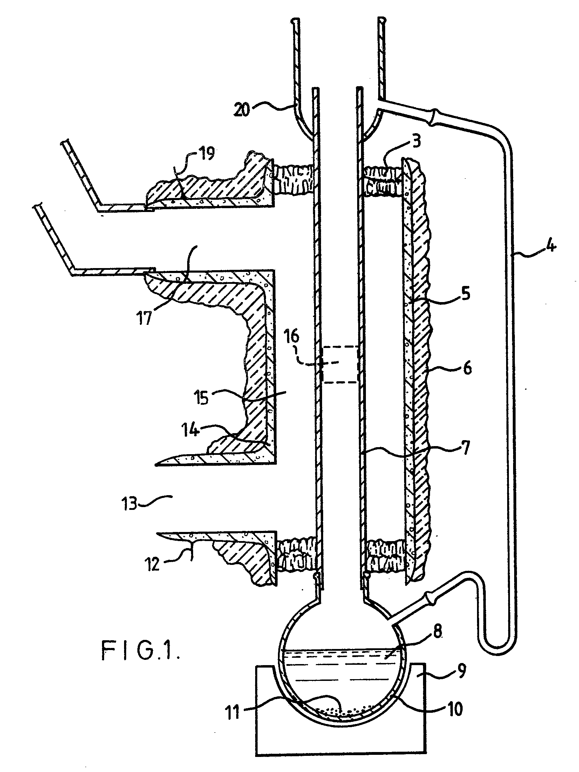

Referring to figure 1, the apparatus comprises a 100 ml glass flask 10 containing fluorocarbon liquid 8 heated by an 'isomantle' heater 9. Granules 11 are placed in the flask to promote steady-state boiling. A superheated vapour tube 7 is returned via a tube 4 to the flask 10. Hot air for superheating is supplied from a 'Black and Decker' type blower via an inlet 17 to the tube 7 and through a hot air jacket 15 before exhausting through an outlet 13. Inlet 17, air jacket 15 and outlet 17 are surrounded on the exterior with "Kaowool" insulation 6. The air jacket 15 is wound with resistance wire 14 having positive and negative ends 12 and 19 respectively, to comprise a heater that could augment the hot-air blower. In figure 1, numeral 3 indicates asbestos rope, numeral 5 indicates furnace cement around the tube 7, and numeral 20 indicates a vapour collection vessel. Observation of solder under test can be made via a window 16. However, visual examination may be insufficient and a device was constructed to more accurately monitor the time required for the solder to melt.

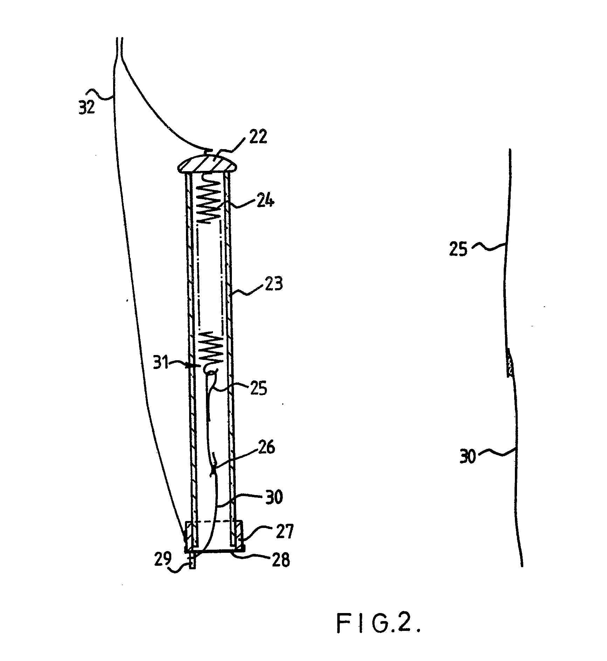

Figure 2 illustrates a test cell for this purpose. A spring 24 fixed to a metal cap 22 is held under tension in a glass tube 23 by a wire 25 and by a wire 30 connected to a fixing lug 29. Wires 25 and 30 are held together by the solder under test 26. A circuit timing wire 32, solder 26, wire 25, spring 24, cap 22 and wire 33 form part of a suitable electrical circuit. A thermocouple 27 is fixed in brass end pieces 28. The whole cell assembly can be lowered into the tube 7 of the apparatus of figure 1, during the test procedure. When the solder 26 melts, the electrical circuit is broken and the time taken is measured on a chart recorder. In figure 2, numeral 31 indicates the free end of the spring 24.

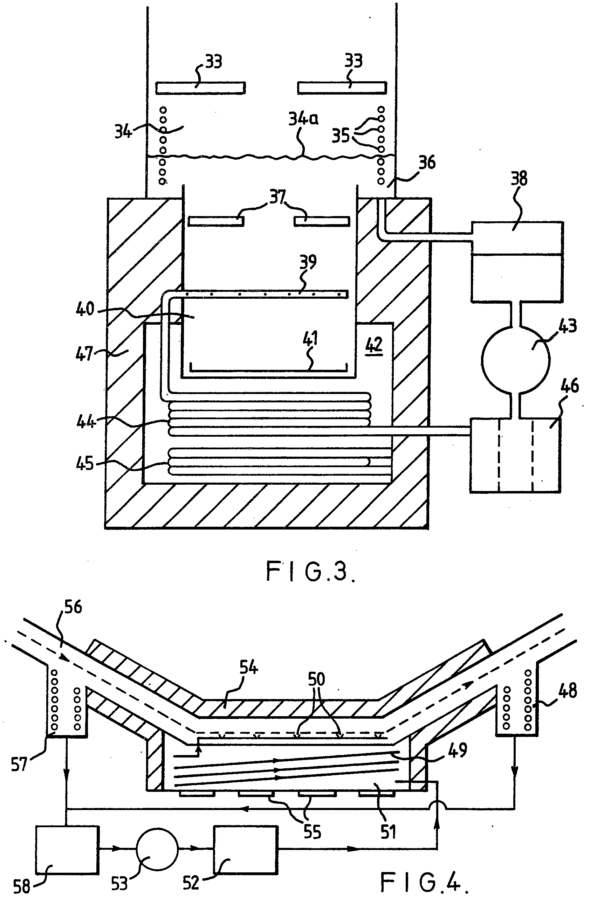

An example of an apparatus suitable for use in the condensation/superheating process according to the invention is shown schematically in figure 3. All shaded areas represent thermal insulation.

Figure 3 show a reflow chamber 40 surrounded by a thermostatically controlled hot liquid bath 42 heated by a heater 45 and filled with a non-flammable molten salt acting as a heat transfer fluid. A coil 44 situated in the bath 42 has an inlet connected to a filter 46 and an outlet connected to a jet assembly 39 situated in the reflow chamber 40. Both the reflow chamber and the molten salt bath are lagged with thermal insulation 47. A vapour recovery chamber 34 comprises the space between vapour baffles 33 and 37 and is situated directly above the reflow chamber 40. Cooling coils 35 are situated in the recovery chamber 34 at a level 34a to which it is required to limit the vapour space.

A steel test piece weighing approximately 5 gms was used to compare the relative flow rate of perfluoro (phenanthrane) vapour and air to attain a test piece temperature of 250°C within a given time, at a power consumption of IKW, in the apparatus shown in figure 3. The results obtained show that, at a flow rate at 250°C, for air the average flow rate was 399 litre/min and for Flutec PP11 (a proprietary fluorocarbon) the average flow rate was 7.8 litre/min; thus the flow rate was about 50 times greater for air than for PP11.

Resin flux can be collected in a disposable liner 41 when the system is running in the superheat mode. Rosin flux appears to be surprisingly thermally stable at temperatures tested so far (up to 260°C) providing that a perfluorocarbon blanket is maintained. Charring and fuming occur almost immediately when air is introduced. The liquid in a reservoir 38 thus remains relatively uncontaminated under operating conditions greatly reducing the load on the filter 46. Low concentrations of soluble contaminants remaining after filter 46 are liable to be thermally stable under the anaerobic condition prevailing in the coil 44 thus avoiding accumulation of pyrolysis products. In figure 3, numeral 36 indicates an annular channel, and numeral 43 indicates a pump arranged between the reservoir 38 and the filter 46.

Liquid flows from the reservoir 38 through the pump 43 to the filter 46 and hence to the coils 44 where evaporation and superheating occur. The vapour is emitted through the jets 39 and flows to the cooling zone defined by the coils 35 where condensation occurs. The liquid then flows back to the reservoir 38 via the channel 36.

Figure 4 shows diagrammatically the application of the concept of superheated vapour soldering to a continuous production line for vapour phase soldering of components to printed circuit boards.

With reference to figure 4, items to be soldered flow in the direction indicated by the broken line through a channel 56 which, unlike present systems, would not enter a tank containing a boiling liquid at its centre, and would therefore allow a much reduced fluid inventory.

Liquid flows from a reservoir 58 through a metering pump 53, to a filter 52 via coils 49 where evaporation and superheating occur. The vapour is emitted through jets 50 and flows to cooling zones 48 and 57 where condensation occurs. The liquid then flows back to reservoir 58. A lagged, hot-salt bath 51 is heated by pad heaters 55 and is in contact with the base of the channel 56 which is also lagged with thermal insulation 54 between the cooling zones 48 and 57.

The invention will be further described with reference to the following illustrative examples.

EXAMPLE 1

The test cell illustrated in figure 2 of the drawings was assembled using pure tin (m.p. 232°C) as the solder 26. A proprietary fluorocarbon (Flutec PP11 manufactured by I.S.C. Chemicals Limited, U.K.) was heated under reflux in the apparatus illustrated in Figure 1. The vapour in the tube 7 was raised in temperature from the normal boiling point of the liquid (215°C) to 300°C (superheated) and the melting time of pure tin was measured. The Flutec PP11 was removed and the experiment repeated for air in tube 7.

12

The results were as follows:-

| Fluid | Experiment No. | Circuit break/melting time (sec.) |
|---|---|---|
| Flutec PP11 | 1 | 18 |
| | 2 | 17 |
| | 3 | 18 |
| | | Average 18 |
| Air | 1 | 124 |
| | 2 | 127 |
| | 3 | 135 |
| | | Average 129 |

13

The melting time of the tin solder was thus seven times faster in Flutec PP11 than in air.

EXAMPLE 2

The same procedure was repeated comparing the melting times of a high lead alloy (Pb/Sn/Ag, ratio 93.5/5/1.5 w/w, m.p. 296°C), except that the fluids were superheated to 350°C. The results were as follows:-

| Fluid | Experiment No. | Circuit break/melting time (sec.) |
|-------|----------------|-----------------------------------|
| Flutec PP11 | 1 | 83 |
| | 2 | 118 |
| | 3 | 113 |
| | 4 | 87 |
| | | Average 100 |
| Air | 1 | 192 |
| | 2 | 198 |
| | 3 | 222 |
| | 4 | 186 |
| | 5 | 185 |
| | | Average 197 |

The melting time of the high lead alloy solder was thus twice as fast in Flutec PP11 than in air.

14

## EXAMPLE 3

The procedure of Example 2 was repeated for pure lead m.p. 328°C. The results were as follows:-

| Fluid | Experiment No. | Circuit break/melting time (sec.) |
|---|---|---|
| Flutec PP11 | 1 | 108 |
| | 2 | 114 |
| | 3 | 114 |
| | 4 | 116 |
| | | Average 113 |
| Air | 1 | 258 |
| | 2 | 240 |
| | 3 | 240 |
| | 4 | 216 |
| | | Average 239 |

The melting time of the pure lead solder was thus twice as fast in Flutec PP11 than in air.

The above examples show that the solder melting time is significantly faster in fluorocarbon vapour than in air at the same temperature. In all of the experi ments, the reflux rate was kept at a minimum so that the transfer of heat by the fluorocarbon did not include a significant forced convection factor. It is considered that forced convection would further widen the difference between air and fluorocarbon, since the latter is about twenty to thirty times the density of air and therefore has a greater heat capacity, capable of delivering more energy to a surface, per unit volume flowing.

The condensation/superheat process according to the present invention has important advantages of simplicity and versatility which allow it to be used to attain any soft-soldering temperature. These advantages can be summarised as follows.

(a) Heating by a combination of condensation and superheating with complete temperature flexibility up to the temperature stability limit of the fluid (approximately 350°C with Flutec compounds).

(b) About 2 to 10 times faster than infra-red/hot air depending on conditions.

(c) Adaptable both to batch and in-line equipment without undue complexity.

(d) Two sided assembly possible with different melting point solders.

(e) Any stable fluid can be used (lends itself to CF compounds rather than CFO compounds (ethers) which are more vulnerable to Lewis acid attack).

(f) Small fluorocarbon inventory.

(g) No secondary blanket necessary.

(h) Much reduced flux filtration problems.

(i) No scorching of printed circuit boards.

(j) Anaerobic conditions enabling the soldering of lead rich alloys (M. Pt about 300°C) without using a reducing atmosphere.

(k) Single fluid used for all temperatures.

17

CLAIMS

1. A process for soldering, wherein heat to melt solder is transferred from a vapour, characterized in that said heat is transferred

    (a)  by latent heat of condensation of the vapour, and

    (b)  by heat-transfer of sensible heat from the vapour, which is super-heated above its normal boiling point.

2. A process as claimed in claim 1, characterized in that the vapour is that of a saturated fluorocarbon.

3. A process as claimed in claim 1 or 2, characterized in that the vapour is predominantly perfluoro(perhydrophenanthrene), $C_{14}F_{24}$.

4. A process as claimed in any of claims 1 to 3, characterized in that the heat transfer of stage (b) is aided by natural or forced convection of the superheated vapour.

5. A process as claimed in claim 4, characterized in that a substantial proportion of the heat transfer is by radiation.

6.    Apparatus for soldering components comprising:

(a)    means (44, 45; 49, 55) for boiling and superheating a heat-transfer liquid to produce a superheated vapour;

(b)    walls defining a vapour-space (40; 56) for confining heat-transfer vapours, said space having an upper boundary (34a) limited by cooling means (35; 48, 57);

(c)    a carrier assembly for introducing , supporting and removing an assembly of components to be soldered in said vapour (40, 56); and

(d)    a vapour recovery circuit for condensing vapour escaping from the said vapour space and returning it to the said boiler/superheater means.

F I G.1.

FIG.2.

F I G. 3.

F I G. 4.